# EUROPÄISCHE PATENTSCHRIFT

(11) **EP 0 793 697 B1**
(45) Veröffentlichungstag und Bekanntmachung des Hinweises auf die Patenterteilung: **16.02.2000**
(21) Anmeldenummer: 95940172.0
(22) Anmeldetag: 14.11.1995
(51) Int. Cl.: C09J 121/00, C08L 21/00

(54) **ELASTOMERPRODUKTE MIT AKUSTISCHEN DÄMPFUNGSEIGENSCHAFTEN**
ELASTOMER PRODUCTS WITH ACOUSTIC ATTENUATION PROPERTIES
PRODUITS ELASTOMERES A PROPRIETES INSONORISANTES

(30) Priorität: 23.11.1994 DE 4441656
(43) Veröffentlichungstag der Anmeldung: 10.09.1997
(73) Patentinhaber: Henkel Teroson GmbH (HRB 185), 69123 Heidelberg (DE)
(72) Erfinder: BORN, Peter, D-69207 Sandhausen (DE); SCHENKEL, Hubert, D-69207 Sandhausen (DE)
(74) Vertreter: Hase, Christian, Dr.
(86) Internationale Anmeldenummer: EP9504467
(87) Internationale Veröffentlichungsnummer: WO9616136

(56) Entgegenhaltungen:
- EP-A- 0 658 597
- DE-A- 4 122 849
- US-A- 4 626 568
- CHEMICAL ABSTRACTS, vol. 111, no. 22, 27.November 1989 Columbus, Ohio, US; abstract no. 196569, & JP,A,01 006 062 (NTN-RULON IND CO LTD) 10.Januar 1989
- CHEMICAL ABSTRACTS, vol. 98, no. 6, 7.Februar 1983 Columbus, Ohio, US; abstract no. 35863, & JP,A,57 139 132 (ASAHI CHEMICAL IND CO LTD) 27.August 1982
- CHEMICAL ABSTRACTS, vol. 99, no. 22, 28.November 1983 Columbus, Ohio, US; abstract no. 177320, & JP,A,58 047 032 (SHOWA ELECTRIC WIRE AND CABLE CO LTD) 18.März 1983

## Beschreibung

Die Erfindung betrifft heißhärtende reaktive Zusammensetzungen auf der Basis von natürlichen und/oder synthetischen, olefinische Doppelbindungen enthaltenden, Elastomeren und Vulkanisationsmitteln, die im vulkanisierten Zustand akustisch dämpfende Eigenschaften haben. Die Erfindung betrifft fernerhin ein Verfahren zur Herstellung dieser Zusammensetzungen sowie deren Verwendung als Klebstoffe, Dichtstoffe und Beschichtungen.

Bei der Herstellung von Fahrzeugen, Maschinen und Geräten werden heutzutage fast ausschließlich sehr dünnwandige Bleche eingesetzt. Mechanisch sich bewegende Teile oder laufende Motoren versetzen diese dünnwandigen Bleche unvermeidbar in Schwingungen, die vielfach im Hörbereich des menschlichen Ohres sind. Diese Schwingungen werden in Form von Körperschall über das gesamte Fahrzeug bzw. die Maschine oder das Gerät fortgeleitet und können an entfernten Stellen in die Luft als störender Schall abgestrahlt werden. Zur Reduzierung der Schallabstrahlung und Körperschalldämpfung werden diese Bleche daher insbesondere im Automobilbau und bei der Herstellung von Haushaltsgeräten mit schalldämpfenden Belägen, sog. Antidröhnbeschichtungen, versehen.

Nach herkömmlicher Verfahrensweise werden dabei Mischungen aus Füllstoffen mit hohem spezifischen Gewicht und Bitumen zu Folien extrudiert, aus denen dann die entsprechenden Formteile gestanzt oder geschnitten werden. Anschließend werden diese Folien auf die betreffenden Blechteile geklebt, wobei sie ggf. noch unter Erwärmen an die Form des Bleches angepaßt werden müssen. Obwohl diese BitumenFolien aufgrund ihres geringen Materialpreises noch häufig Anwendung finden, sind sie sehr spröde und neigen insbesondere bei tiefen Temperaturen zum Abplatzen von Blech. Auch die vielfach vorgeschlagenen Zusätze von Elastomeren ergeben nur eine geringfügige Verbesserung, die für viele Anwendungen unzureichend ist. Des weiteren ist das Aufbringen der vorgeformten Bitumenteile auf kompliziert geformte oder schwer zugängliche Blechteile von Maschinen oder Fahrzeugen, z.B. die Innenflächen der Hohlräume von Kraftfahrzeugtüren, überhaupt nicht möglich. Als weiterer Nachteil kommt hinzu, daß für ein einziges Fahrzeug oder Gerät in vielen Fällen mehrere Stanzteile benötigt werden, wodurch eine aufwendige Lagerhaltung erforderlich ist.

Man hat daher versucht, mit anderen Polymersystemen die Nachteile der Bitumenfolien zu eliminieren. So wurden z.B. Füllstoffe-enthaltende wässrige Polymerdispersionen von Polyvinylacetat oder Ethylen-Vinylacetat-Copolymeren entwickelt, die auf die Blechteile in der notwendigen Belagdicke aufgespritzt werden können. Diese Systeme sind jedoch für die industrielle Verwendung mit hohen Fertigungsstückzahlen nachteilig, da insbesondere bei größeren Belagdicken das Wasser nicht schnell genug aus der aufgespritzten Schicht entfernt werden kann. Ein weiterer Nachteil dieser konventionellen Methoden der Schalldämpfung besteht darin, daß diese Materialien nur dem einzigen Zweck der Schalldämpfung dienen.

Bei der Herstellung von Fahrzeugen, Maschinen und Geräten ist man heute bemüht, die Komplexität der Herstellungsprozesse zu vereinfachen und damit die Herstellungkosten zu senken.

Bei der Herstellung von Fahrzeugen, Maschinen und Geräten werden weiterhin Klebstoffe, Dichtstoffe und Beschichtungen eingesetzt. Bisher werden die Kleb- und/oder Dichtstoffe hauptsächlich auf der Basis ihrer Primär-Eigenschaften ausgewählt:
- Festigkeit, d.h. Scherfestigkeit, Schälfestigkeit
- Bruchdehnung, Flexibilität
- Alterungsbeständigkeit
- einfache Handhabung.

Bei Beschichtungen, speziell Unterbodenschutzbeschichtungen, ist die Abriebfestigkeit ein weiteres Auswahlkriterium.

Es gibt zahlreiche Bestrebungen, die Komplexität der Herstellung von Fahrzeugen, Maschinen und Geräten zu reduzieren und damit die Herstellkosten zu senken. Es besteht daher Bedarf an "multifunktionellen Produkten", d.h. zum Beispiel, es besteht Bedarf an Klebstoffen, Dichtstoffen und/oder Beschichtungen, die neben ihrer Hauptfunktion zusätzliche Probleme lösen.

Die EP-A-358598 oder die DE-A-3444863 beschreiben Plastisol-Formulierungen, die die Doppelfunktion eines Unterbodenschutzes (Schutz gegen Abrieb) und akustischer Dämpfung erfüllen. Die DE-A-4013318 beschreibt einen Zweischicht-Unterbodenschutz, der die Funktionen Unterbodenschutz und Absorption des Geräusches, das von einschlagenden Teilchen (Steinen, Splitt, Wasser usw.) herrührt, erfüllt. Während diese Produkte/Verfahren die Kombination von Unterbodenschutz und Geräuschdämmung recht zufriedenstellend erfüllen, besteht hauptsächlich ein Bedarf, die Funktion eines Klebstoffes und/oder Dichtstoffes mit Geräuschdämpfung zu kombinieren. Dies ist insbesondere wünschenswert für die Teile eines Autos, einer Maschine oder eines Gerätes, die keinen Schutz gegen Abrieb benötigen wie z.B. der Kofferraumdeckel, die Motorhaube, die Türen oder die Stirnwand eines Fahrzeugs.

Kleb-und Dichtstoffe für diese Teile werden normalerweise frühzeitig im Produktionsprozeß, im sogenannten "Rohbau" angewendet. Die dabei verwendeten Bleche sind mit Korrosionsschutzölen und Ziehölen von mehreren Gramm pro m² bedeckt, so daß der verwendete Kleb-/Dichtstoff die Fähigkeit besitzen muß, diese Öle aufzunehmen. Obwohl Plastisole, insbesondere PVC-Plastisole, im Rohbau verwendet werden, sind die Plastisole, die in der EP-A-358598 oder DE-A-3444863 genannt werden, nicht geeignet als Kleb-/Dichtstoffe für den Rohbau. Plastisolformulierungen, die speziell für den Rohbau entwickelt worden sind, haben keine oder nahezu keine schalldämpfenden Eigenschaften.

Eine weitere Gruppe von Kleb-/Dichtstoffen, die für die Rohbau-Anwendung geeignet ist, basiert auf Kautschuken, insbesondere vulkanisierbaren Zusammensetzungen auf der Basis von 1,4-Polybutadienen und/oder 1,4-Polyisoprenen. Diese Zusammensetzungen enthalten vorzugsweise flüssige Polydiene niedrigen Molekulargewichts, Schwefel und ggf. Beschleuniger für die Schwefelvulkanisation. Zusätzlich können diese Zusammensetzungen hochmolekularen, sog. Festkautschuk enthalten, wobei sowohl die flüssigen Polydiene und/oder der Festkautschuk funktionelle Gruppen wie z.B. Hydroxylgruppen, Carboxylgruppen, Anhydridgruppen oder Epoxygruppen enthalten kann. Diese Gruppe von Kleb-/Dichtstoffen auf Kautschukbasis sind in einer Reihe von Patentanmeldungen beschrieben, z.B. EP-A-97394, EP-A-309903, EP-A-309904, DE-A-3834818, DE-A-4120502, DE-A-4122849, EP-A-181441 und EP-A-356715.

Der DE-A-4122849 ist zu entnehmen, daß die Verklebung von Blechen im Automobilrohbau u.a. zum Ziel hat, auftretende Schwingungen zu dämpfen. Die Schrift macht hierzu zwar keine näheren Angaben, jedoch ist davon auszugehen, daß es sich bei diesen Schwingungen um niederfrequente Schwingungen außerhalb des Hörbereichs des menschlichen Ohrs handelt, wie sie z.B. den Vibrationen von Motorhauben, Kofferraumdeckeln und Türen auftritt, wenn diese keine geeigneten Verstärkungsrahmen haben ("antiflutter adhesive").

Die EP-A-181441 beschreibt zweikomponentige in der Wärme vernetzbare Massen und Verfahren zur Herstellung von in der Kälte vernetzenden Massen, wobei das eine Bindemittel Hydroxylgruppen trägt und das zweite Bindemittel Carbonsäuregruppen bzw. Säureanhydridgruppen enthält. Unmittelbar bei der Anwendung müssen hierbei die beiden Komponenten vermischt werden, die Aushärtung erfolgt entweder in der Wärme unter Esterbildung zwischen den Hydroxylgruppen und den Carbonsäuregruppen, die Aushärtung in der Kälte bedarf des Zusatzes von Katalysatoren. Es wird angegeben, daß diese Massen u.a. als Schwingungsdämpfungsmassen oder Geräuschdampfungsmassen Anwendung finden können. Weitere Angaben, insbesondere zur Wirksamkeit dieser Dämpfung bzw. welche Substrate gedämpft werden sollen, fehlen in dieser Schrift.

Die noch unveröffentlichte europäische Anmeldung 93120384.8 beschreibt die Verwendung von 3,4-Polyisopren in Kombination mit anderen härtbaren oder nichthärtbaren flüssigen und/oder festen Kautschuken und die Verwendung dieser Zusammensetzungen für einkomponentige, heißvulkanisierbare Kleb-/Dichtstoffe mit akustischen Dämpfungseigenschaften.

Es wurde jetzt gefunden, daß einkomponentige, heißhärtbare (vulkanisierbare) Kleb-/Dichtstoffe auf der Basis von Flüssigkautschuken und ggf. Festkautschuken so modifiziert werden können, daß der Einsatz des schwer zugänglichen 3,4-Polyisoprens nicht notwendig ist, wobei trotzdem sehr gute akustische Dämpfung dieser Zusammensetzungen erzielt werden.

Als akustisch wirksame Dämpfung oder Schwingungsdämpfung im Sinne dieser Erfindung soll dabei die Körperschalldämpfung verstanden werden, diese bewirkt bekanntermaßen die Minderung des Dröhnens von Blechkonstruktionen.

Die Beurteilung der Wirksamkeit der akustischen Dämpfungseigenschaften der erfindungsgemäßen Zusammensetzungen erfolgt dabei nach dem Biegeschwingungsversuch gemäß Teil 3 der DIN 53440. Dazu werden Stahlbleche mit den erfindungsgemäßen Zusammensetzungen beschichtet, diese Beschichtung wird dann unter Temperaturbedingungen, wie sie z.B. im Fahrzeugbau zur Aushärtung der diversen Lacksysteme vorherrschen, d.h. im Bereich zwischen 130°C und 220°C, ausgehärtet. Der Biegeschwingungsversuch wird dann bei 200 Hz und verschiedenen Temperaturen durchgeführt, um eine wirksame akustische Dämpfungswirkung dieser Zusammensetzungen im "Gebrauchs-Temperaturbereich", d.h. zwischen ca. 0°C und +40°C beurteilen zu können. Als akustisch wirksam im Sinne dieser Erfindung sollen dabei alle heißhärtenden (vulkanisierbaren) Zusammensetzungen gelten, die im Biegeschwingungsversuch gemäß DIN 53440, Teil 3, eine extrem hohe Dämpfung, d.h. einen Verlustfaktor des beschichteten Blechstreifens d(combi) von > 0,1, vorzugsweise 0,2 oder mehr aufweisen.

Die erfindungsgemäßen Zusammensetzungen enthalten die folgenden Stoffe:
a) 0-10 Gew.-% Festkautschuk(e) mit einem Molekulargewicht von 100000 oder höher, wobei der oder die Festkautschuk(e) aus der Gruppe cis-1,4-Polybutadien, Styrol-Butadien-Kautschuk, Naturkautschuk, Ethylen-Propylen-Dien-Kautschuk (EPDM), Nitrilkautschuk, Butylkautschuk, Acrylkautschuk, Polyurethankautschuk, ausgewählt wird/werden
b) 5-50 Gew.-% flüssige(s) Polyen(e) mit einem Molekulargewicht unter 20000
c) ein Vulkanisationssystem ausgewählt aus der Gruppe, bestehend aus
   - Schwefel und einem oder mehreren organischen Beschleuniger(n) und Metalloxid(en), wobei der Anteil an Schwefel mindestens 3 Gew.-% der Gesamtformulierung ausmacht
   - peroxidischen Vulkanisationssystemen
   - Chinonen, Chinondioximen oder Dinitrosobenzol, ggf. in Kombination mit organischen Beschleunigern und/oder Metalloxid(en)
d) ggf. weitere Zusätze ausgewählt aus der Gruppe gebildet durch
   - Thermoplastische Polymere in Form von feinzerteilten Pulvern
   - Füllstoffen
   - Klebrigmacher und/oder Haftvermittler
   - Extenderöle
   - Alterungsschutzmittel
   - Rheologiehilfsmittel, oder deren Mischungen, wobei die Summe der Bestandteile a) bis d) sich zu 100 Gew.-% addieren.

Flüssigkautschuke oder Elastomere können dabei aus der folgenden Gruppe der Homo- und/oder Copolymeren ausgewählt werden:

Polybutadiene, insbesondere die 1,4- und 1,2-Polybutadiene, Polybutene, Polyisobutylene, 1,4-Polyisoprene, Styrol-Butadien-Copolymere, Butadienacrylnitril-Copolymere, wobei diese Polymeren endständige und/oder (statistisch verteilte) seitenständige funktionelle Gruppen haben können. Beispiele für derartige funktionelle Gruppen sind Hydroxy-, Carboxyl-, Carbonsäureanhydrid- oder Epoxygruppen. Das Molekulargewicht dieser Flüssig-kautschuke ist typischerweise unterhalb von 20000, vorzugsweise zwischen 900 und 10000. Der Anteil an Flüssigkautschuk an der Gesamtzusammensetzung hängt dabei von der erwünschten Rheologie der ungehärteten Zusammensetzung und den erwünschten mechanischen und akustischen Dämpfungseigenschaften der ausgehärteten Zusammensetzung ab. Der Anteil an flüssigem Kautschuk oder Elastomer variiert normalerweise zwischen 5 und 50 Gew.% der Gesamtformulierung.

Geeignete Festkautschuke bzw. Elastomere haben üblicherweise ein signifikant höheres Molekulargewicht als die Flüssigkautschuke (100000 oder höher), Beispiele für geeignete Kautschuke sind Polybutadien, vorzugsweise mit einem sehr hohen Anteil an 1,4-cis-Doppelbindungen, (typischerweise über 95%), Styrolbutadienkautschuk, Butadienacrylnitrilkautschuk, synthetischer oder natürlicher Isoprenkautschuk, Butylkautschuk oder Polyurethankautschuk.

Der Zusatz von feinverteilten thermoplastischen Polymerpulvern kann eine signifikante Verbesserung der akustischen Dämpfung bewirken, wenn dieses thermoplastische Polymer eine Glasübergangstemperatur im Bereich zwischen 5°C und 50°C aufweist. Beispiele für geeignete thermoplastische Polymere sind Polypropylen, Polyethylen, thermoplastische Polyurethane, Methacrylatcopolymere, Styrolcopolymere, Polyvinylchlorid, Polyvinylacetal sowie insbesondere Polyvinylacetat und dessen Copolymere.

Die Füllstoffe können aus einer Vielzahl von Materialien ausgewählt werden, insbesondere sind hier zu nennen Kreiden, natürliche gemahlene oder gefällte calciumcarbonate, Calcium-Magnesium-Carbonate, Silicate, Schwerspat sowie Ruß. Insbesondere sind auch blättchenförmige Füllstoffe, wie z.B. Vermiculit, Glimmer, Talk oder ähnliche Schichtsilikate geeignet. In einigen Formulierungen haben solche blättchenförmigen Füllstoffe die Wirkung der akustischen Dämpfung signifikant verbessert. Es kann ggf. zweckmäßig sein, daß zumindest ein Teil der Füllstoffe oberflächenvorbehandelt ist, insbesondere hat sich bei den verschiedenen Calciumcarbonaten bzw. Kreiden eine Beschichtung mit Stearinsäure als zweckmäßig erwiesen. Der Gesamtanteil an Füllstoffen in der Formulierung kann zwischen 10 und 70 Gew.% variieren, der Vorzugsbereich liegt zwischen 25 und 60 Gew.%.

Als Klebrigmacher und/oder Haftvermittler können Kohlenwasserstoffharze, Phenolharze, Terpen-Phenolharze, Resorcinharze oder deren Derivate, modifizierte oder unmodifizierte Harzsäuren bzw. -ester (Abietinsäurederivate), Polyamine, Polyaminoamide, Polyepoxyharze, Anhydride und Anhydrid-enthaltende Copolymere eingesetzt werden. Art und Menge der Klebrigmacher bzw. Haftvermittler hängt von der Polymerzusammensetzung des Kleb-/ Dichtstoffes bzw. der Beschichtungszusammensetzung ab, von der Festigkeit der gehärteten Zusammensetzung und von dem Substrat, auf welches die Zusammensetzung appliziert wird. Typische klebrigmachende Harze (Tackifier) wie z.B. die Terpenphenolharze oder Harzsäurederivate werden normalerweise in Konzentrationen zwischen 5 und 20 Gew.% verwendet, typische Haftvermittler wie Polyamine, Polyaminoamide oder Resorcinderivate werden im Bereich zwischen 0,1 und 10 Gew.% verwendet.

Vorzugsweise sind die erfindungsgemäßen Zusammensetzungen frei von Weichmachern, insbesondere Phthalsäureestern oder Extenderölen. Es kann jedoch notwendig sein, die Rheologie der ungehärteten Zusammensetzung und/oder die mechanischen Eigenschaften und/oder die akustische Dämpfung der gehärteten Zusammensetzungen durch die Zugabe von sog. Extenderölen, d.h. aliphatischen, aromatischen oder naphthenischen Ölen zu beeinflussen. Vorzugsweise geschieht dies jedoch durch die Zugabe von niedermolekularen Polybutenen, Polyisobutylenen oder durch die Verwendung von niedrigmolekularen Flüssigkautschuken. Falls Extenderöle eingesetzt werden, werden Mengen im Bereich zwischen 5 und 20 % verwendet.

Die geeigneten Härter bzw. Vulkanisationsmittel, Beschleuniger oder Katalysatoren hängen von den reaktiven und/oder funktionellen Gruppen der ausgewählten Polymeren ab. Für die Härtungsreaktion über die olefinischen Doppelbindungen (Vulkanisation) der flüssigen und/oder festen Kautschuke eignen sich radikalische Vulkanisationssysteme, insbesondere auf der Basis von organischen oder anorganischen Peroxiden, Vulkanisationssysteme auf der Basis von Schwefel, insbesondere in Kombination mit organischen Vulkanisationsbeschleunigern und ggf. Zinkverbindungen, es eignen sich jedoch auch Vulkanisationssysteme von Chinonen, Dioximen oder Dinitrosobenzol.

Besonders bevorzugt sind die Vulkanisationssysteme auf der Basis von pulverförmigem Schwefel, besonders in Kombination mit Vulkanisationsbeschleunigern wie z.B. Mercaptobenzothiazol, Dithiocarbamaten, Sulfenamiden, Disulfiden wie z.B. Dibenzothiazoldisulfid und/oder Thiuramdisulfide, Aldehyd-Amin-Beschleuniger, Guanidine und Metalloxide wie z.B. Zinkoxid. Zusätzlich können typische Kautschukvulkanisationshilfsmittel wie z.B. Fettsäuren (z.B. Stearinsäure) in der Formulierung vorhanden sein. Der Gehalt an Schwefel kann dabei in weiten Grenzen variieren, er kann bis zu 5 Gew.%, vorzugsweise bis etwa 10 Gew.% betragen, die Untergrenze sollte nicht unter 3 Gew.% liegen. Dabei hängt der Gehalt an Schwefel von der Reaktivität der eingesetzten Kautschuke, insbesondere der Flüssigkautschuke ab. Außerdem läßt sich über den Schwefelgehalt das Maximum des Verlustfaktors sowie der nutzbare Temperaturbereich eines ausreichend hohen Verlustfaktors beeinflussen. Der Gehalt an Vulkanisationsbeschleunigern kann zwischen 0 und etwa 10 Gew.% variieren. Auch der Gehalt an Metalloxiden liegt im Bereich zwischen 0 und 10 Gew.%.

Als schwefelfreie Vulkanisationssysteme eignen sich insbesondere Vulkanisationssysteme auf der Basis von p-Benzochinondioxim, wobei diese Zusammensetzungen zusätzlich die oben genannten Vulkanisationsbeschleuniger und/oder Metallverbindungen in den oben genannten Mengenbereichen enthalten können.

Gegen den thermischen, thermooxidativen oder Ozonabbau der erfindungsgemäßen Zusammensetzungen können konventionelle Stabilisatoren wie z.B. sterische gehinderte Phenole oder Aminderivate eingesetzt werden, typische Mengenbereiche für diese Stabilisatoren sind 0,1 bis 5 Gew.%.

Obwohl die Rheologie der erfindungsgemäßen Zusammensetzungen normalerweise durch die Auswahl der Füllstoffe und das Mengenverhältnis der niedermolekularen Flüssig-Kautschuke in den gewünschten Bereich gebracht werden kann, können konventionelle Rheologiehilfsmittel wie z.B. pyrogene Kieselsäuren, Bentone oder fibrilierte oder Pulp-Kurzfasern im Bereich zwischen 0,1 und 7% eingesetzt werden. Außerdem können weitere konventionelle Hilfs- und Zusatzmittel in den erfindungsgemäßen Zusammensetzungen Verwendung finden.

Die Wirksamkeit der akustischen Dämpfung der erfindungsgemäßen Zusammensetzung kann auf die spezifischen Bedürfnisse der Anwendung in bezug auf die Lage des Maximums des Verlustfaktors sowie des Temperaturbereiches, in dem extrem hohe akustische Dämpfung bewirkt wird, beeinflußt werden. Die Haupteinflußfaktoren sind dabei das Vulkanisationssystem (Gehalt an Schwefel, Gehalt an Vulkanisationsbeschleuniger) und Gehalt und Reaktivität an Kautschuken, insbesondere der Flüssigkautschuke. Wie bereits ausgeführt, kann ein Zusatz von geeigneten von thermoplastischen Polymerpulvern sowohl das Maximum als auch den Temperaturbereich der wirksamen akustischen Dämpfung positiv beeinflussen. Bis zu einem gewissen Grad kann auch die Auswahl der Art und Menge der Füllstoffe die akustischen Eigenschaften beeinflussen, hier hat sich gezeigt, daß insbesondere plättchenförmige Füllstoffe wie z.B. Glimmer einen vorteilhaften Einfluß auf den Verlustfaktor haben. Zusätzlich kann der Verlustfaktor durch die Dicke der Beschichtung beeinflußt werden. Geschäumte Materialien bewirken bekanntermaßen einen höheren Verlustfaktor, obwohl dies in solchen Fällen nicht anwendbar sein wird, in denen eine hohe Zugscherfestigkeit für den Klebstoff verlangt wird. In den meisten Anwendungsfällen ist es wünschenswert, daß das Maximum des Verlustfaktors etwa bei Raumtemperatur (etwa 20°C) liegt und daß der Bereich einer hohen Dämpfung (Verlustfaktor > 0,1) sich über einen möglichst breiten Temperaturbereich erstreckt. Die Härtungsbedingungen für die Kleb-/Dichtstoff- bzw. Beschichtungs-Zusammensetzungen gemäß dieser Erfindung können an die spezifische Applikation angepaßt werden. Wie eingangs erwähnt, ist ein bevorzugtes Anwendungsfeld der Rohbau in der Automobilindustrie, so daß die Härtung der Zusammensetzungen in einem Temperaturbereich zwischen 80°C und 240 °C in 10 bis 35 Min. stattfinden soll, vorzugsweise finden im Rohbau Temperaturen zwischen 160 und 200° Verwendung. Ein entscheidender Vorteil der erfindungsgemäßen Zusammensetzungen gegenüber Plastisolen gemäß Stand der Technik ist ihre sogenannte "Wäscherbeständigkeit" unmittelbar nach dem Auftrag der Klebstoffe, d.h. sie bedürfen keiner Vorgelierung wie die Plastisole, um in den diversen Wasch- und Phosphatierungsbädern des Rohbaus beständig zu sein. In den nachfolgenden Ausführungsbeispielen soll die Erfindung näher erläutert werden, wobei die Auswahl der Beispiele keine Beschränkung des Umfanges des Erfindungsgegenstandes darstellen sollen.

Die akustische Dämpfungs-Eigenschaft der Zusammensetzungen wurde dabei in den Beispielen gemäß "Oberst-Methode", wie in der DIN 53440, Teil 3, beschrieben, mit Hilfe von beschichteten Stahlstreifen bestimmt. Die Aushärtung der Beschichtung erfolgte dabei in einem konventionellen Labor-Trockenschrank. Falls nicht anders angegeben, sind alle Teile in den nachfolgenden Beispielen Gewichtsteile.

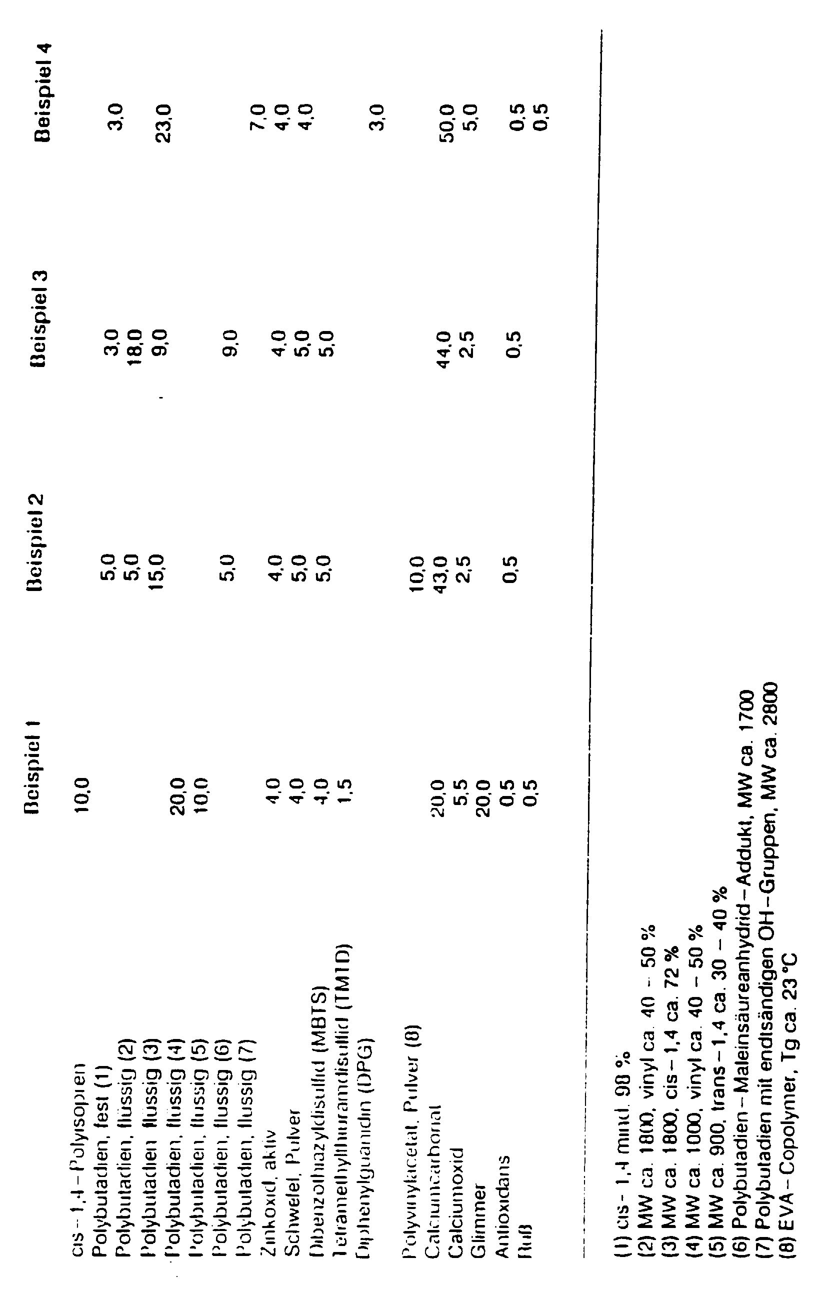

### Akustische Dämpfungseigenschaften

1mm dicke Federstahlstreifen der Abmessungen 240mm x 10mm wurden auf einem 200mm langen Abschnitt mit einer Schicht der Produkte aus den Beispielen 1 bis 3 sowie dem Vergleichsbeispiel 4 beschichtet, anschließend wurden die Beschichtungen 30 Min. bei 180°C ausgehärtet. Die Bestimmung des akustischen Dämpfungswertes (d-combi) erfolgte dabei nach dem Biegeschwingungsversuch der DIN 53440, Teil 3, bei 200 Hz. Dabei wurde auf ein Belaggewicht von 50% normiert, d.h., das Gewicht der Beschichtung mit dem akustisch dämpfenden Kleb-/Dichtstoff betrug 50% des Blechgewichtes.

Die Grafik zeigt die Temperaturabhängigkeit der akustischen Dämpfung d(combi) 50% der Beispiele 1 bis 3 sowie das Vergleichsbeispiel 4, das geringer vernetzt ist.

Vergleichsbeispiel 4 zeigt insbesondere, daß der Gehalt an Schwefel >3% und an Beschleuniger ohne ein ausreichendes Angebot an reaktivem Kautschuk nicht zur erfindungsgemäßen Vernetzung und damit zu guter akustischer Dämpfung führt.

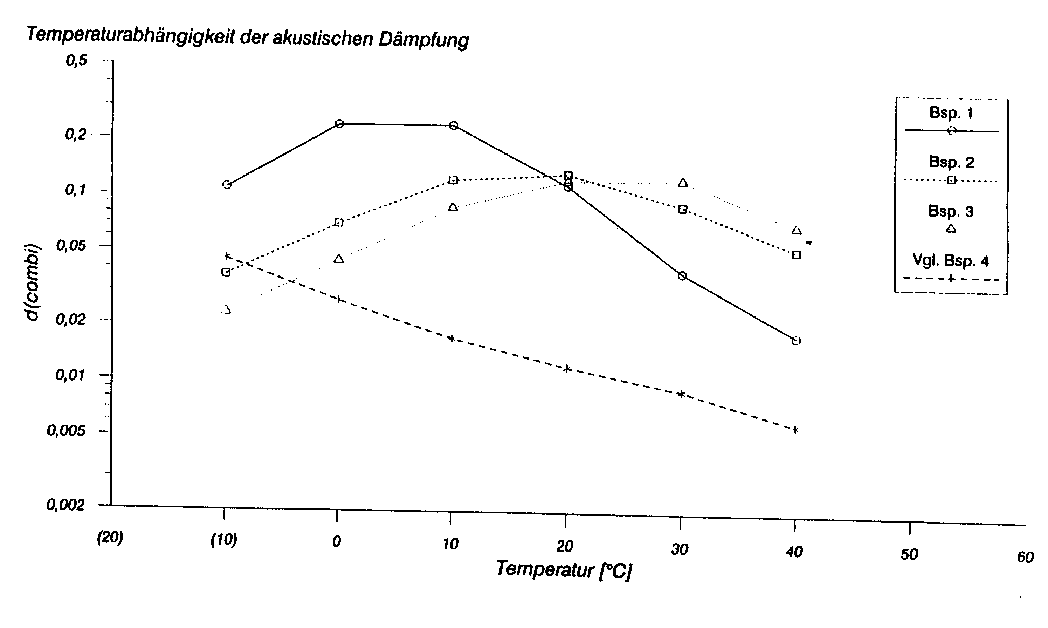

## Patentansprüche

1. Heißhärtende reaktive Zusammensetzung auf der Basis von natürlichen und/oder synthetischen olefinische Doppelbindungen enthaltenden Elastomeren und Vulkanisationsmitteln, **dadurch gekennzeichnet**, daß die Zusammensetzung
a) 0-10 Gew.-% Festkautschuk(e) mit einem Molekulargewicht von 100000 oder höher, wobei der oder die Festkautschuk(e) aus der Gruppe cis-1,4-Polybutadien, Styrol-Butadien-Kautschuk, Naturkautschuk, Ethylen-Propylen-Dien-Kautschuk (EPDM), Nitrilkautschuk, Butylkautschuk, Acrylkautschuk, Polyurethankautschuk, ausgewählt wird/werden
b) 5-50 Gew.-% flüssige(s) Polyen(e) mit einem Molekulargewicht unter 20000
c) ein Vulkanisationssystem ausgewählt aus der Gruppe, bestehend aus
- Schwefel und einem oder mehreren organischen Beschleuniger(n) und Metalloxid(en), wobei der Anteil an Schwefel mindestens 3 Gew.-% der Gesamtformulierung ausmacht
- peroxidischen Vulkanisationssystemen
- Chinonen, Chinondioximen oder Dinitrosobenzol, ggf. in Kombination mit organischen Beschleunigern und/oder Metalloxid(en)
d) ggf. weitere Zusätze ausgewählt aus der Gruppe gebildet durch
- Thermoplastische Polymere in Form von feinzerteilten Pulvern
- Füllstoffen
- Klebrigmacher und/oder Haftvermittler
- Extenderöle
- Alterungsschutzmittel
- Rheologiehilfsmittel, oder deren Mischungen, wobei die Summe der Bestandteile a) bis d) sich zu 100 Gew.-% addieren,
enthält, wobei das Maximum des Verlustfaktors der d (combi) der vulkanisierten Zusammensetzung im Biegeschwingungsversuch nach DIN 53440 bei 200 Hz im Bereich von +10°C bis +40°C liegt und mindestens 0.1, vorzugsweise 0.2 oder mehr beträgt.

2. Zusammensetzung nach Anspruch 1, **dadurch gekennzeichnet**, daß mindestens ein flüssiges Polyen aus der Gruppe bestehend aus 1,2-Polybutadien, 1,4-Polybutadien, Polyisopren, Polybuten, Polyisobutylen, Copolymere des Butadiens und/oder Isoprens mit Styrol und/oder Acrylnitril, Copolymere von Acrylsäureestern mit Dienen ausgewählt ist, wobei das Molekulargewicht des flüssigen Polyens im Bereich von 900 bis 10000 liegt.

3. Zusammensetzung nach Anspruch 2, **dadurch gekennzeichnet**, daß das oder die flüssige(n) Polyen(e) zusätzlich terminale und/oder statistisch verteilte Carboxylgruppen, Carbonsäureanhydridgruppen, Hydroxylgruppen, Aminogruppen, Mercaptogruppen oder Epoxygruppen als funktionelle Gruppen enthält.

4. Zusammensetzung nach mindestens einem der vorhergehenden Ansprüche, **dadurch gekennzeichnet**, daß sie zusätzlich ein thermoplastisches Polymer mit einer Glasübergangstemperatur zwischen 5 °C und 50 ° enthält.

5. Zusammensetzung nach Anspruch 4, **dadurch gekennzeichnet**, daß das thermoplastische Polymer olefinische Doppelbindungen, Hydroxylgruppen, Carboxylgruppen, Epoxygruppen, Aminogruppen und/oder Mercaptogruppen als funktionelle Gruppen enthält.

6. Herstellung der heißhärtenden reaktiven Zusammensetzung nach mindestens einem der vorhergehenden Ansprüche durch Mischen der Komponenten unter hoher Scherung.

7. Verwendung der Zusammensetzung nach mindestens einem der vorhergehenden Ansprüche als akustisch dämpfenden ein- oder zweikomponentigen Klebstoff, Dichtstoff oder Beschichtungsmasse.

8. Verfahren zum Verbinden von Metallteilen und/oder Abdichten von Fugen zwischen Metallteilen, **dadurch gekennzeichnet**, daß
- zumindest eine Oberfläche eines Teils mit den Zusammensetzungen nach mindestens einem der vorhergehenden Ansprüche beschichtet wird,
- die zu verbindenden Teile zusammengefügt werden,
- und die gefügten Teile, ggf. unter mechanischer Fixierung, erhitzt werden, um die reaktive Zusammensetzung auszuhärten.

9. Verfahren zum Beschichten von Bauteilen durch Aufsprühen oder Extrudieren von Zusammensetzungen gemäß mindestens einem der Ansprüche 1 bis 5 auf die Oberfläche des Teils und Erhitzen des beschichteten Teils zum Aushärten der Zusammensetzung.

10. Verfahren zum Beschichten, Kleben und/oder Abdichten von Bauteilen, **dadurch gekennzeichnet**, daß eine extrudierte Folie, eine extrudierte Schnur oder ein extrudiertes Band, hergestellt aus einer Zusammensetzung nach mindestens einem der Ansprüche 1 bis 5, auf mindestens ein Bauteil aufgelegt wird, die Teile ggf. zusammengefügt werden und anschließend erhitzt werden, um die Zusammensetzung auszuhärten.

## Claims

1. A heat-curing reactive composition based on natural and/or synthetic elastomers containing olefinic double bonds and vulcanizing agents, characterized in that the composition contains
a) 0 to 10% by weight of solid rubber(s) having a molecular weight of 100,000 or higher selected from the group consisting of cis-1,4-polybutadiene, styrene/butadiene rubber, natural rubber, ethylene/propylene/diene rubber (EPDM), nitrile rubber, butyl rubber, acrylate rubber and polyurethane rubber,
b) 5 to 50% by weight of liquid polyene(s) having a molecular weight below 20,000,
c) a vulcanization system selected from the group consisting of
- sulfur and one or more organic accelerator(s) and metal oxide(s), sulfur making up at least 3% by weight of the formulation as a whole,
- peroxidic vulcanization systems,
- quinones, quinone dioximes or dinitrosobenzene, optionally in combination with organic accelerators and/or metal oxide(s),
d) optionally other additives selected from the group consisting of
- thermoplastic polymers in the form of fine powders,
- fillers,
- tackifiers and/or coupling agents,
- extender oils,
- antiagers,
- flow aids
or mixtures thereof,
the sum of components a) to d) adding up to 100% by weight,
the maximum loss factor d (combi) of the vulcanized composition in the flexural fatigue test according to DIN 53440 at 200 Hz and at +10°C to +40°C being at least 0.1 and preferably 0.2 or more.

2. A composition as claimed in claim 1, characterized in that at least one liquid polyene is selected from the group consisting of 1,2-polybutadiene, 1,4-polybutadiene, polyisoprene, polybutene, polyisobutylene, copolymers of butadiene and/or isoprene with styrene and/or acrylonitrile, copolymers of acrylates with dienes, the molecular weight of the liquid polyene being in the range from 900 to around 10,000.

3. A composition as claimed in claim 2, characterized in that the liquid polyene(s) additionally contain(s) terminal and/or statistically distributed carboxyl groups, carboxylic anhydride groups, hydroxyl groups, amino groups, mercapto groups or epoxy groups as functional groups.

4. A composition as claimed in at least one of the preceding claims, characterized in that it additionally contains a thermoplastic polymer with a glass transition temperature between 5 and 50°C.

5. A composition as claimed in claim 4, characterized in that the thermoplastic polymer contains olefinic double bonds, hydroxyl groups, carboxyl groups, epoxy groups, amino groups and/or mercapto groups as functional groups.

6. The production of the heat-curing reactive composition claimed in at least one of the preceding claims by mixing of the components with intensive shearing.

7. The use of the composition claimed in at least one of the preceding claims as an acoustically damping one-component or two-component adhesive, sealing compound or coating composition.

8. A process for bonding metal parts and/or for sealing joints between metal parts, characterized in that
- at least one surface of one part is coated with the compositions claimed in at least one of the preceding claims,
- the parts to be jointed are fitted together,
- and the fitted parts are heated, optionally with mechanical fixing, to cure the reactive composition.

9. A process for coating structural components by spraying or extruding the compositions claimed in at least one of claims 1 to 5 onto the surface of the component and heating the coated component to cure the composition.

10. A process for coating, bonding and/or sealing structural components, characterized in that an extruded film, an extruded strand or an extruded ribbon produced from the composition claimed in at least one of claims 1 to 5 is applied to at least one structural component, the components are optionally fitted together and subsequently heated to cure the composition.

## Revendications

1. Composition réactive durcissant à chaud à base d'élastomères et d'agents de vulcanisation naturels et/ou synthétiques contenant des doubles liaisons oléfiniques, caractérisée en ce que la composition comprend :
a) 0-10 % en poids de caoutchouc(s) solide(s) ayant un poids moléculaire de 100 000 ou plus, le ou les caoutchouc(s) solide(s) ayant choisi(s) dans le groupe du cis-1,4-polybutadiène, du caoutchouc styrène-butadiène, du caoutchouc naturel, du caoutchouc éthylène-propylènediène (EPDM), du caoutchouc nitrile, du caoutchouc butyle, du caoutchouc acryle, du caoutchouc polyuréthane,
b) 5-50 % en poids de polyène(s) liquide(s) ayant un poids moléculaire inférieur à 20 000,
c) un système de vulcanisation choisi dans le groupe constitué par
- le soufre et un ou plusieurs accélérateurs organiques et oxydes métalliques, la proportion de soufre s'élevant à au moins 3 % en poids de la formulation totale,
- des systèmes de vulcanisation à fonction peroxyde,
- des quinones, des quinones dioximes ou du dinotrosobenzène, le cas échéant en combinaison avec des accélérateurs organiques et/ou des oxydes métalliques,
d) le cas échéant d'autres additifs choisis dans le groupe formé par
- les polymères thermoplastiques sous forme de poudre finement divisée,
- les charges,
- les agents collants et/ou les corps facilitant l'adhérence,
- des huiles diluantes,
- des agents de protection contre le vieillissement,
- des adjuvants rhéologiques ou leurs mélanges,
la somme des composants a) à d) étant égale à 100 %,
la maximum du facteur de perte de d (combi) de la composition vulcanisée dans l'essai de flexions alternées selon la norme DIN 53440 à 200 Hz se situant dans un intervalle de +10°C à +40°C et étant égal à au moins 0,1, de préférence à 0,2.

2. Composition selon la revendication 1,
caractérisée en ce qu'
on choisit un polyène liquide du groupe constitué par le 1,2-polybutadiène, le 1,4-polybutadiène, le polyisoprène, le polybutène, le polyisobutylène, les copolymères de butadiène et/ou d'isoprène avec le styrène et/ou l'acrylonitrile, les copolymères d'esters d'acide acrylique avec des diènes, le rapport molaire du polyène liquide se situant dans un intervalle de 900 à 10 000.

3. Composition selon la revendication 2,
caractérisée en ce que
le ou les polyènes liquides contiennent en outre des groupes carboxyle, des groupes anhydrides d'acides carboxylique, des groupes hydroxyle, des groupes amino, des groupes mercapto ou des groupes époxyde comme groupes fonctionnels terminaux et/ou statistiquement répartis.

4. Composition selon au moins une des revendications précédentes,
caractérisée en ce qu'
elle contient en outre un polymère thermoplastique ayant une température de transition vitreuse comprise entre 5°C et 50°C.

5. Composition selon la revendication 4,
caractérisée en ce que
le polymère thermoplastique contient des doubles liaisons oléfiniques, des groupes hydroxyle, des groupes carboxyle, des groupes époxyde, des groupes amino ou des groupes mercapto comme groupes fonctionnels.

6. Production de la composition réactif durcissant à chaud selon au moins une des revendications précédentes, par un mélange des composants avec un fort cisaillement.

7. Utilisation de la composition selon au moins une des revendications précédentes, comme adhésif, masse d'étanchéité ou masse de revêtement à un ou deux composants comme isolant acoustique.

8. Procédé de liaison de pièces métalliques et/ou d'étanchéification de joints entre des pièces métalliques,
caractérisé en ce que
- on recouvre au moins une surface d'une pièce avec les compositions selon au moins l'une des revendications précédentes,
- on rassemble les pièces à relier,
- et on chauffe les pièces jointes, le cas échéant avec fixation métallique, pour faire durcir la composition réactive.

9. Procédé de revêtement de pièces par pulvérisation ou extrusion de compositions selon au moins une des revendications 1 à 5 à la surface de la pièce et chauffage de la pièce revêtue en vue du durcissement de la composition.

10. Procédé de revêtement, de collage, et/ou d'étanchéification de la pièce,
caractérisé en ce qu'
on dépose une feuille extrudée, ou un ruban extrudé, fabriqué à partir d'une composition selon au moins une des revendications 1 à 5, sur au moins une pièce, en ce que le cas échéant on assemble les pièces puis en ce qu'on chauffe pour durcir la composition.
